# EUROPÄISCHE PATENTSCHRIFT

(11) **EP 0 758 960 B1**
(45) Veröffentlichungstag und Bekanntmachung des Hinweises auf die Patenterteilung: **15.12.1999**
(21) Anmeldenummer: 96906754.5
(22) Anmeldetag: 08.03.1996
(51) Int. Cl.: B60K 13/04, F01N 7/14, F16L 59/06, F16L 59/12

(54) **HITZESCHILD MIT BEFESTIGUNG FÜR AUSPUFFANLAGEN**
HEAT SHIELD WITH FASTENING FOR EXHAUST SYSTEMS
BOUCLIER THERMIQUE AVEC FIXATION POUR SYSTEMES D'ECHAPPEMENT

(30) Priorität: 11.03.1995 DE 19508872
(43) Veröffentlichungstag der Anmeldung: 26.02.1997
(73) Patentinhaber: Hecralmat, 9494 Schaan (LI)
(72) Erfinder: PIRCHL, Gerhard, CH-5708 Birrwil (CH)
(74) Vertreter: Riebling, Peter, Dr.-Ing.
(86) Internationale Anmeldenummer: EP9600984
(87) Internationale Veröffentlichungsnummer: WO9628315

(56) Entgegenhaltungen:
- CA-A- 929 053
- DE-A- 2 614 396
- FR-A- 2 085 919
- US-A- 3 237 716

## Beschreibung

Gegenstand der Erfindung ist ein Hitzeschild mit Befestigung für Auspuffanlagen nach dem Oberbegriff des Patentanspruchs 1. Hitzeschilde der in Rede stehenden Art werden zur Abschirmung gegenüber der Karosserie von Kraftfahrzeugen verwendet, wobei die hitzeabgebenden Teile ein Auspuffrohr, ein Auspufftopf, ein Katalysator oder andere Teile der Auspuffanlage oder des Motors sein können. Die Erfindung bezieht sich also auf ein Hitzeschild der eingangs genannen Art, welches die Wärmeabstrahlung eines wärmeabgebenden Teils gegenüber benachbarten Teilen abschirmen soll.

Hierbei ist es bekannt, das Hitzeschild aus einen mehrlagigen Aluminiummaterial zu gestalten, was den Vorteil hat, daß dieses Aluminiummaterial sehr leicht verformbar ist und ein hohes Reflektionsvermögen aufweist, so daß mit relativ geringem Materialeinsatz ein hochwirksames Hitzeschild geschaffen werden kann.

Derartige Hitzeschilde wurden zumeist an Teilen der Karosserie selbst befestigt, was den Einsatzbereich sehr stark einschränkte.

Mit dieser bekannten Befestigungsart des Hitzeschildes an der Karosserie oder direkt mit der Karosserie verbundenen Teilen bestehen also folgende Nachteile:
1. Man muß das Hitzeschild relativ groß gestalten, weil man von dem hitzeabgebenden Teil relativ weit entfernt ist und daher die gesamte Karosseriefläche gegenüber dem hitzeabgebenden Teil abschirmen muß, was zu der Notwendigkeit führt, ein relativ großflächiges Hitzeschild zu verwenden.
   Man muß sich auch deshalb relativ weit von dem wärmeabgebenden Auspuff entfernen, weil dieser ein gewisses Schwingungsvermögen aufweist und der schwingende Auspuff mit seiner maximalen Schwingungsamplitude nicht an dem gegenüberliegenden Hitzeschild anschlagen darf. Aus diesen Grunde muß man dann relativ großflächige Karosserieflächen oder auch Tankflächen eines Benzintanks abschirmen.
2. Mit der Befestigung des Hitzeschildes an Karosserieteilen oder direkt mit der Karosserie verbundenen Teilen besteht der weitere Nachteil, daß man zusätzliche Befestigungsteile an der Karosserie benötigt, die nicht immer zur Verfügung stehen.

Soll beispielsweise die Hitzeabstrahlung eines direkt am Benzintank vorbeiführenden Auspuffrohres abgeschirmt werden, dann ist es praktisch nicht möglich, das Hitzeschild am Benzintank selbst zu befestigen, weil das Hitzeschild bis zu 200°C oder 250° C warm wird und die Befestigungsteile am aus Kunststoff bestehenden Benzintank bzw. der Tank selbst nur Temperaturen bis zu 80° C aushalten. Es ist demzufolge mit einer oben genannten Hitzschild-Befestigung nicht möglich, aus Aluminium bestehende Hitzeschilde an Auspuffteilen oder anderen, eine hohe Wärmeenergie abgebenden Teilen direkt zu befestigen, da der Schmelzpunkt von Aluminium im Bereich von etwa 600°C liegt und damit oberhalb des Schmelzpunktes der Kunststoff-Anbauteile.

Es kann bei bei einer unmittelbaren Befestigung auch zu einer zu großen Wärmeübertragung und damit Temperaturentwicklung im Fahrzeuginneren kommen, so daß Teile der Innenverkleidung, wie z.B. ein Teppich, oder andere Gegenstände beschädigt werden.

Die Druckschrift DE-A 26 14 396 offenbart bereits eine Auspuffanlage eines Fahrzeugs mit in geringem Abstand am wärmeabgebenden Teil angebrachter zylindrischer Hitzeschildplatte, wobei die Hitzeschildplatte über als Abstandshalter dienenden Einprägungen mit dem wärmeabgebenden Teil in Berührung steht und über Klemmbänder an diesem befestigt ist. Nachteil hierbei ist, daß durch den wärmeleitenden Kontakt der Hitzeschildplatte mit den wärmeabgebenden Teilen die Temperatur der Hitzeschildplatte nicht genügend niedrig ist, um eine optimale wärmeabschirmende Wirkung der Hitzeschildplatte zu gewährleisten.

Der Erfindung liegt deshalb die Aufgabe zugrunde, ein Hitzeschild und eine Befestigung des Hitzeschildes der eingangs genannten Art so weiterzubilden, daß die Temperatur des Hitzeschildes möglichst niedrig gehalten wird, um eine optimale wärmeabschirmende Wirkung zu erreichen.

Zur Lösung der gestellten Aufgabe ist die Erfindung durch die technische Lehre des Anspruchs 1 gekennzeichnet.

Wesentliches Merkmal der Erfindung ist, daß zur Verbindung zwischen dem Haltebügel und dem wärmeabgebenden Teil ein Verbindungselement vorgesehen ist, welches Verbindungselement eine Öffnung im Hitzeschild durchgreift und die Verbindung zwischen Verbindungselement und Haltebügel auf der der Wärmequelle abgewandten Seite des Hitzeschildes erfolgt und dadurch das Hitzeschild vom wärmeabgebenden Teil allseitig isoliert nicht in direkten wärmeleitenden Kontakt mit diesen kommt.

Das Hitzeschild ist in relativ kurzem Abstand gegenüber dem hitzeabgebenden Teil, z.B. dem Auspuffrohr, dem Auspufftopf, dem Auslaßkrümmer oder ähnlichen Teilen angeordnet und vom wärmeabgebenden Teil aus gesehen hinter dem Hitzeschild ist ein Haltebügel angeordnet, welcher Haltebügel direkt mit dem wärmeabgebenden Teil über das Verbindungselement verbunden ist.

In einer Weiterbildung ist vorgesehen, daß der Haltebügel das Hitzeschild an einer Stelle des Hitzeschildes haltert und befestigt, an der die Temperatur von Hitzeschild und/oder Haltebügel bereits relativ stark abgenommen hat.

In einer praktischen Ausführungsform der vorliegenden Erfindung ist es vorgesehen, den Haltebügel etwa U-förmig profiliert auszubilden und als Befestigungselement am Auspuffrohr, Auspufftopf oder Auslaßkrümmer des Motors einen Stehbolzen zu verwenden, der unmittelbar mit dem wärmeabgebenden Teil verbunden ist und der den Haltebügel hält.

Erfindungsgemäss ist der Haltebügel mit seinen unteren U-Schenkeln im Bereich der freien Enden dieser Schenkel mit dem Hitzeschild verbunden. Dies führt dazu, daß vom hitzeabgebenden Bauteil an den Haltebügel übertragene Wärme zunächst die gesamte Länge des Haltebügels durchlaufen muß. Da sich der Haltebügel hinter dem Hitzeschild in einem relativ kalten Bereich befindet, kommt es hier zu einer deutlichen Abkühlung des Haltebügels, so daß an den Verbindungsstellen zwischen Haltebügel und Hitzeschild nur noch die Temperatur des durch die Wärmestrahlung erwärmten Hitzeschildes vorliegt. Eine Beschädigung des Hitzeschildes durch den wärmeren Haltebügel wird dadurch vermieden.

Mit der gegebenen Befestigung wird ein weit verbreitetes Vorurteil in der Fachwelt beseitigt, denn man befestigt nach der technischen Lehre der vorliegenden Erfindung das Hitzeschild in unmittelbarer Nähe oder in geringem Abstand zu dem wärmeabgebenden Teil, wobei aber der hochwärmefeste Haltebügel außerhalb dieses Teiles, d. h. radial auswärts von der Wärmequelle außen am Hitzeschild vorbeigeführt wird und selbst durch das Hitzeschild vor Wärmestrahlungen geschützt wird.

Damit ergeben sich wesentliche Vorteile, die bisher im Stand der Technik noch nicht gegeben waren.

Durch die Abschirmung des hitzeabgebenden Teiles mit einem Aluminium-Hitzeschild, welches in relativ geringem Abstand angeordnet wird, ergibt sich der Vorteil, daß im Zwischenraum zwischen dem wärmeabgebenden Teil und dem Hitzeschild selbst keine weiteren Einbauten mehr vorhanden sind, die die Wärmereflektion stören könnten.

Das Hitzeschild ist nun in der Lage, in optimaler Weise die auf das Hitzeschild einstrahlende Wärmemenge wieder auf das Auspuffrohr oder das sonstige wärmeabgebende Teil zurück zu reflektieren, ohne daß sich das Hitzeschild im wesentlichen in den Verformungsbereich erhitzt. Untersuchungen haben ergeben, daß bei einem etwa tausend Grad warmen Auspuffrohr (Rotglut) ein das Auspuffrohr umgebendes Hitzeschild sich nur noch auf etwa eine Temperatur von 300°C erwärmt, wobei nun wesentlich ist, daß das Hitzeschild an keiner Stelle im wärmeleitenden Kontakt mit der hochtemperierten Wärmequelle kommt.

Das Hitzeschild ist also allseitig isoliert vom wärmeabgebenden Teil und kommt an keiner Stelle direkt in wärmeleitenden Kontakt mit der Wärmequelle.

Hierbei besteht nun der Vorteil, daß der Haltebügel selbst zwar im wärmeleitenden Kontakt mit der Wärmequelle sich befindet, weil er mit dem Befestigungselement unmittelbar mit der Wärmequelle verbunden ist, daß aber die Verbindung zwischen dem Haltebügel und dem Hitzeschild an der Stelle vorgenommen wird, wo sich auch der Haltebügel auf eine entsprechene Temperatur abgekühlt hat, wo keine Verformung oder sogar ein Schmelzen des Hitzeschildes zu befürchten ist.

Hierbei wird es bevorzugt, wenn die Schenkel des U-förmig gebogenen Haltebügels in einer ersten Ausführungsform etwa horizontal nach außen abgekröpft sind und auch das Hitzeschild in diesem Bereich horizontal abgekröpft ist, um in diesem Bereich die beiden Teile miteinander durch Nieten oder andere Verbindungselemente zu verbinden.

In einer weiteren Ausgestaltung ist es vorgesehen, statt der horizontal abgekröpften Schenkel das Hitzeschild vertikal nach unten weiter zu führen und auch das Hitzeschild mit entsprechenden vertikalen Ansätzen zu versehen, um einen vertikalen Verbindungsbereich zwischen den beiden Teilen zu schaffen.

Wichtig ist in beiden Fällen, daß sich die Verbindungsstelle zwischen dem Hitzeschild und dem Haltebügel in dem Bereich befindet, wo der Haltebügel bereits auf eine zuträgliche Temperatur abgekühlt ist. Diese Verbindungsstelle sollte also möglichst entfernt von der Verbindungsstelle zwischen dem Haltebügel und dem Befestigungselement an der Wärmequelle liegen.

Selbstverständlich ist es möglich, auch mehrere Verbindungen zwischen dem Hitzeschild und dem Haltebügel zu schaffen.

Mit der gegebenen technischen Lehre ergibt sich der wesentliche Vorteil, daß das Hitzeschild nur noch eine relativ geringe Oberfläche haben muß, denn es befindet sich in dichtem Abstand auf dem Auspufftopf selbst oder dem Auspuffrohr, und es ist nun nicht mehr notwendig, in relativ großem Abstand gegenüberliegende Karosserieflächen mit dem Hitzeschild abzudecken. Das Hitzeschild wird also möglichst nahe, aber im Abstand zu der Wärmequelle im radialen Abstand zu dieser Wärmequelle angeordnet, wobei jegliche direkte Wärmeleitung zwischen dem Hitzeschild und der Wärmequelle unterbunden werden muß.

Es ergibt sich auch der Vorteil einer Montageerleichterung, denn es ist nun erstmals möglich, sofort beim Einbau der Auspuffanlage in das Kraftfahrzeug, diese Auspuffanlage mit dem Hitzeschild zu versehen und fertig zu montieren, und es bedarf keiner eigenen Montagestellen mehr an der Karosserie.

Damit ist es nun erstmals auch möglich, eine Wärmeabschirmung zwischen einem Auspuffrohr und empfindlichen Karosserieteilen, wie z.B. einem aus kunststoffbefindlichen Benzintank zu schaffen, ohne daß die Notwendigkeit besteht, die Befestigung am Benzintank selbst vornehmen zu müssen.

Zwar war es bisher möglich, Hitzeschilder direkt auch auf dem Auspuff zu befestigen, wobei diese Hitzeschilder aus hochfestem Stahl oder Chromstahl gefertigt werden mußten, was mit dem Nachteil hoher Herstellungskosten und schlechter Wärmereflektionseigenschaften und einem höheren Gewicht erkauft werden mußte. Das Chromstahl mußte vor Verformungen geschützt werden, weil es im direkten wärmeleitenden Kontakt mit der Wärmequelle verbunden war, und deshalb mußte es relativ stark dimensioniert werden, was mit hohen Herstellungskosten verbunden war.

Ferner bestand der Nachteil, daß dieses Chromstahl bei den hohen Temperaturen oxidierte und dadurch die Wärmereflektionseigenschaften verschlechtert wurden, was mit einer entsprechenden Verminderung des Wirkungsgrades des Hitzeschildes verbunden war. Derartige Hitzeschilde konnten deshalb nicht gegenüber empfindlichen Karosserieflächen eingesetzt werden.

Mit der vorliegenden Erfindung ist es erstmals möglich, aus Aluminium bestehende Hitzeschilde einzusehen, deren Strahlungszahl beispielsweise einen Wert von 0,3 aufweist, während entsprechende Chromstahlbleche eine Strahlungszahl von 4,5 oder mehr haben.

Die Erfindung ist nicht auf die Befestigung des Haltebügels mittels Stehbolzen an der Wärmequelle beschränkt. Es können sämtliche Befestigungsarten zwischen der Wärmequelle und dem Haltebügel vorgesehen werden. Statt der hier näher dargestellen Stehbolzen können auch andere Befestigungselemente verwendet werden, beispielsweise kann der Bügel direkt abstandshaltend an der Wärmequelle befestigt werden, z.B. durch eine Verschweißung, es können aber auch lösbare Befestigungselement, wie z.B. Federn, Einschubelemente oder Klemmelemente verwendet werden.

Entscheidend ist immer, daß der Bügel vor der Wärmestrahlung mit dem Hitzeschild selbst geschützt wird, damit er abkühlt und im relativ kühlen Bereich dann die Verbindung mit dem Hitzeschild stattfindet.

Dieser kühle Bereich muß unterhalb des Schmelzpunktes des Hitzeschildes liegen.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung, offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:

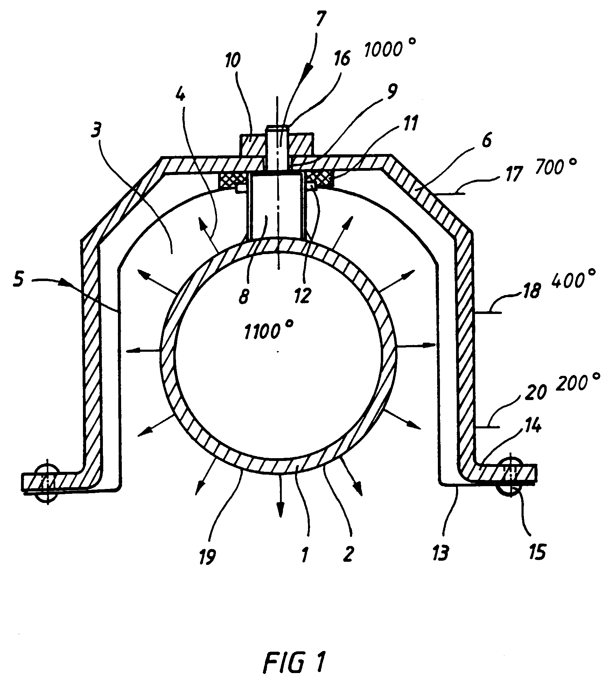

Figur 1: schematisiert im Schnitt eine Ausführung nach der Erfindung nach der Erfindung;
Figur 2: die Seitenansicht der Anordnung nach Figur 1.
Figur 3: eine weitere Befestigungsmöglichkeit für das Hitzeschild.

Bereits schon vorhin wurde angegeben, daß die Wärmequelle beliebig sein kann. Die vorliegende Zeichnung beschreibt als Wärmequelle ein Auspuffrohr 1, an dessen oberen Seite ein Stehbolzen 7 auf dem Auspuffrohr angeschweißt oder in anderer geeigneter Weise, z.B. über eine Klammer,befestigt ist. Der Stehbolzen 7 besteht aus einem Ansatz 8, der einen etwas größeren Durchmesser aufweist, mit dem er auf der Oberfläche 2 des Auspuffrohres 1 angeschweißt ist und einem etwas kleineren Ansatz, der als Schraubenbolzen ausgebildet ist.

Dieser Durchmesserunterschied dient als Anschlag für den Haltebügel. Selbstverständlich ist jede andere Verbindungsart zwischen Haltebügel und Stehbolzen bzw. anderen geeigneten Haltemitteln ebenfalls möglich.

Das Auspuffrohr 1 hat hierbei eine Oberflächentemperatur an der Oberfläche von bis 1100°C.

Wichtig ist, daß ein aus Aluminium bestehendes Hitzeschild 5, welches einlagig oder mehrlagig sein kann, nun radial auswärts den Auspufftopf 1 als etwa 5-förmiges Teil umgibt, wobei die Länge des Hitzeschildes 5 beliebig ist.

Das Auspuffrohr 1 emmitiert in radialer Richtung Hitzestrahlen in Pfeilrichtung 4, und diese werden an der inneren Oberfläche 19 der Hitzeschildes 5 reflektiert und wieder auf das Auspuffrohr zurückgestrahlt.

Wichtig ist, daß das Hitzeschild 5 an keiner Stelle die Wärmequelle selbst berührt, d. h. auch nicht im Bereich des Stehbolzens 7. Zu diesem Zweck weist das Hitzeschild im Bereich des Ansatzes 8 eine Öffnung 12 größeren Durchmessers auf, so daß es in diesem Bereich einen Abstand zu dem Ansatz 8 des Stehbolzens 7 aufweist, um eine direkte Wärmeleitung zu vermeiden.

Diese Öffnung 12 kann durch eine geeignete Dichtung 11 mit geringer Wärmeleitfähigkeit verschlossen sein. Diese Dichtung ist bevorzugt aus einem hochtemperaturfesten Fasermaterial gefertigt.

Auf dem Ansatz 8 des Stehbolzens 7 ist ein Haltebügel 6 montiert, der eine Bohrung aufweist, der durch den Gewindebolzen des Stehbolzens 7 hindurch greift. Der Haltebügel 6 wird mittels einer Mutter 10, die auf dem Gewindebolzen aufgeschraubt ist, auf dem Ansatz 8 gehalten.

Der Haltebügel 6 ist in dieser Ausführungsform etwa u-förmig profiliert und weist im Ausführungsbeispiel an den freien äußeren Enden der U-Schenkel jeweils nach außen gerichtete, etwa horizontale Absätze 14 auf, denen zugeordente Absätze 13 des Hitzeschildes 5 zugeordnet sind. Im Bereich dieser beiden Absätze 13, 14 sind Befestigungselemente wie z. B. Nieten 15 angeordnet, um das Hitzeschild an diesem Haltebügel 6 zu befestigen.

Es versteht sich von selbst, daß über die Länge des Auspuffrohres 1 hinweg gesehen mehrere derartige Haltebügel 6 im gegenseitigen Abstand voneinander angeordnet sein können.

Der Zwischenraum 3 zwischen dem Auspuffrohr 1 und dem Hitzeschild 5 dient als Isolationszwischenraum, so daß an der inneren Oberfläche 19 dieses Hitzeschildes 5 Temperaturen auftreten, die mit Sicherheit unterhalb der Verformungstemperatur des Hitzeschildes liegen.

Wichtig ist, daß die Wärmeleitung von dem Stehbolzen 7 auf den Haltebügel im oberen Bereich erfolgt, so daß bei Position 16, am Stehbolzen 7 direkt, Temperaturen im Bereich von etwa 1000°C erreicht werden.

Im Abstand hiervon kühlt sich der Haltebügel 6 aufgrund Wärmeabstrahlung schon wesentlich ab, so daß bei Position 17 nur noch eine Temperatur von etwa maximal 700°C erreicht wird. Er ist auf seiner gesamten Länge vollständig von dem Hitzeschild 5 von der Wärmeeinwirkung durch das Auspuffrohr 1 geschützt, so daß er sich im Abstand vom Stehbolzen 7 entsprechend abkühlt.

Bei Position 18 hat er eine Temperatur von beispielsweise 400°C, während bei Position 20 nur noch eine Temperatur von etwa 200°C erreicht wird. In diesem Bereich findet die Befestigung zwischen dem Haltebügel und dem Hitzeschild 5 statt.

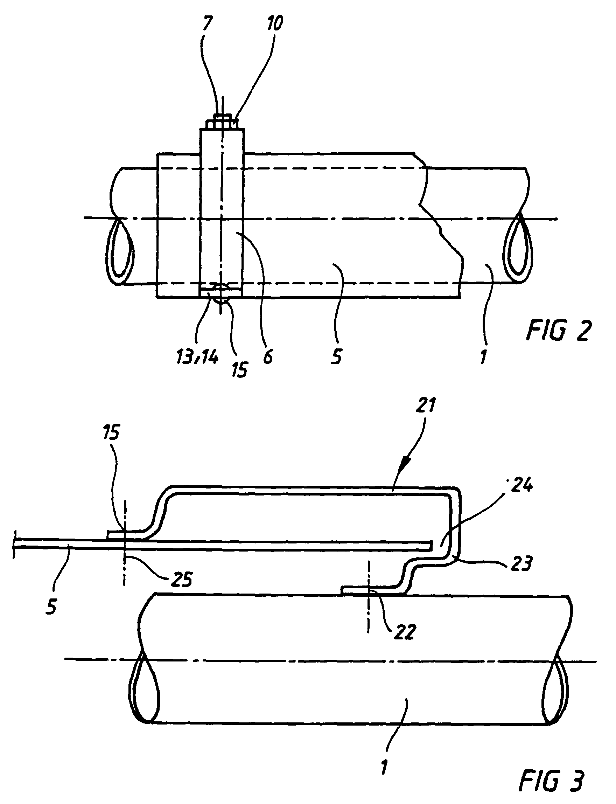

In einer weiteren Ausgestaltung der Erfindung nach Figur 3 ist eine andere Formgebung des Haltebügels dargestellt. Dort ist der Haltebügel 21 nicht als u-förmiges Teil ausgebildet, sondern etwa in der Seitenansicht c-förmig, welches mit einem ersten C-Schenkel an eine Befestigung 22 direkt auf dem Auspufftopf 1 befestigt ist. Der Haltebügel 21 bildet dann eine Abkröpfung 23, in welche das Hitzeschild 5 hineingreift, wobei wichtig ist, daß allseitig ein Spiel 24 zwischen dem Hitzeschild 5 und dem Haltebügel 21 vorhanden ist, um eine direkte Wärmeleitung in dem hochtemperierten Bereich zu vermeiden.

Über seine Länge hinweg gesehen, kühlt sich dann der Haltebügel 21 von der Befestigungsstelle 22 ausgehend ab, so daß an der Befestigungsstelle 25 eine entsprechende Befestigung mit einem Niet 15 oder einem anderen Befestigungselement mit dem Hitzeschild 5 vorgenommen werden kann.

Aus den beiden Ausführungsbeispielen ist zu ersehen, daß nicht die Formgebung des Haltebügels eine Rolle spielt, sondern die Anordnung des Haltebügels im Bezug zum Hitzeschild. Erfindungsgemäß wird also das Hitzeschild direkt im Umgebungsbereich der Wärmequelle angeordnet und der Haltebügel in wärmeleitendem Kontakt mit der Wärmequelle befestigt, wobei aber der Haltebügel außerhalb (in radialem Abstand zum Hitzeschild) und entfernt vom Hitzeschild angeordnet wird und in dem Bereich mit dem Hitzeschild verbunden wird, wo keine Verformung oder ein Schmelzen des Hitzeschildes mehr zu befürchten ist.

Es wird also das Temperaturgefälle am Haltebügel zur Definition der Befestigungsstelle bestimmt. Der Bügel ist durch das Hitzeschild selbst vor Hitzeeinwirkung geschützt und kann dadurch unter die Schmelztemperatur des Aluminiummaterials abkühlen.

Selbstverständlich ist die vorliegende Erfindung nicht auf die Materialwahl von Aluminium für das Hitzeschild beschränkt, sondern es können auch andere Materialien für das Hitzeschild verwendet werden. Insbesondere kommen Aluminium-Sandwichkonstruktionen in Betracht, es können aber auch Kunststoffkonstruktionen in Betracht kommen.

Ein weiterer Vorteil der vorliegenden Erfindung liegt darin, daß die Schalldämmeigenschaften des Hitzeschildes nun wesentlich besser ausgenützt werden, weil das Hitzeschild in kurzem Abstand und nahe an der schallabgebenden Quelle angeordnet werden kann und dadurch eine Schallausbreitung optimal eingedämmt wird.

Insgesamt ergibt sich eine gleichmäßige Abschirmwirkung, die mit wesentlich geringerem Aufwand als bisher erreicht werden kann.

### Zeichnungslegende

- 1: Auspuffrohr
- 2: Oberfläche
- 3: Zwischenraum
- 4: Pfeilrichtung
- 5: Hitzeschild
- 6: Haltebügel
- 7: Stehbolzen
- 8: Ansatz
- 9: Bohrung
- 10: Mutter
- 11: Dichtung
- 12: Öffnung
- 13: Absatz (Hitzschild)
- 14: Absatz (Bügel)
- 15: Niet
- 16: Position
- 17: Position
- 18: Position
- 19: Oberfläche
- 20: Position
- 21: Haltebügel
- 22: Befestigungsstelle
- 23: Abkröpfung
- 24: Spiel
- 25: Befestigungsstelle

## Patentansprüche

1. Hitzeschild, basierend auf einer Abschirmung von Wärmestrahlung, das zwischen einer Wärmequelle und den vor Wärme zu schützenden Bauteilen angebracht ist, wobei das Hitzeschild (5) in nur geringem Abstand von dem oder den wärmeabgebenden Teilen (1) angeordnet ist und an dem oder den wärmeabgebenden Teilen (1) mindestens ein Haltebügel (6;21 angebracht ist, der von der Wärmequelle aus gesehen zumindest teilweise hinter dem Hitzeschild (5) verläuft, **dadurch gekennzeichnet**, daß zur Verbindung zwischen dem Haltebügel (6;21) und dem wärmeabgebenden Teil (1) ein Verbindungselement (7) vorgesehen ist, welches Verbindungselement (7) eine Öffnung (12) im Hitzeschild (5) durchgreift und die Verbindung zwischen Verbindungselement (7) und Haltebügel (6) auf der der Wärmequelle abgewandten Seite des Hitzeschildes (5) erfolgt.

2. Hitzeschild nach Anspruch 1, **dadurch gekennzeichnet**, daß die Verbindung zwischen Hitzeschild (5) und Haltebügel (6;21) an einer relativ kalten Stelle des Haltebügels (6;21) und/oder des Hitzeschildes (5) erfolgt.

3. Hitzeschild nach einem der Ansprüche 1 bis 2, **dadurch gekennzeichnet**, daß der Haltebügel (6) etwa U-förmig ausgebildet ist und mit den Enden seiner U-Schenkel mit dem Hitzeschild (5) verbunden ist.

4. Hitzeschild nach einem der Ansprüche 1 bis 2, **dadurch gekennzeichnet**, daß der Haltebügel (21) etwa c-förmig geformt ist.

5. Hitzeschild nach einem der Ansprüche 1 bis 4, **dadurch gekennzeichnet**, daß die Verbindung zwischen Hitzeschild (5) und Haltebügel (6) über Nieten (15) erfolgt.

6. Hitzeschild nach einem der Ansprüche 1 bis 5, **dadurch gekennzeichnet**, daß das Hitzeschild (5) ein ein- oder mehrlagiges Aluminiumbauteil ist.

## Claims

1. Heat shield, based on a screening against thermal radiation, which is accommodated between a heat source and the components being protected against the heat, wherein the heat shield (5) is arranged at only a small distance from the heat-emitting part or parts (1) and to which heat-emitting part or parts (1) at least one retaining member (6; 21) is attached, which seen from the heat source runs at least partly behind the heat shield (5), characterised in that a connecting member (7) is provided as connection between the retaining member (6; 21) and the heat-emitting part (1), which connecting member (7) reaches through an aperture (12) in the heat shield (5) and the connection between connecting member (7) and retaining member (6) occurs on the side of the heat shield (5) facing away from the heat source.

2. Heat shield according to claim 1, characterised in that the connection between heat shield (5) and retaining member (6; 21) occurs at a relatively cold point of the retaining member (6; 21) and/or the heat shield (5).

3. Heat shield according to one of the claims 1 to 2, characterised in that the retaining member (6) is approximately U-shaped and is connected at the ends of its U-shaped sides with the heat shield (5).

4. Heat shield according to one of the claims 1 to 2, characterised in that the retaining member (21) is approximately c-shaped.

5. Heat shield according to one of the claims 1 to 4, characterised in that the connection between heat shield (5) and retaining member (6) is made by means of rivets (15).

6. Heat shield according to one of the claims 1 to 5, characterised in that the heat shield (5) is a single- or multi-layered aluminium component.

## Revendications

1. Bouclier thermique destiné à protéger d'un rayonnement thermique, qui est installé entre une source de chaleur et les pièces à protéger de la chaleur, étant précisé que le bouclier thermique (5) n'est disposé qu'à une faible distance de la ou des pièces dégageant de la chaleur (1) et qu'on installe sur celle(s)-ci au moins un étrier de fixation (6 ; 21) qui s'étend au moins en partie derrière le bouclier thermique (5), à partir de la source de chaleur, caractérisé en ce qu'il est prévu, pour relier l'étrier le fixation (6 ; 21) et la pièce dégageant de la chaleur (1), un élément de liaison (7) qui traverse une ouverture (12) du bouclier thermique (5), et la liaison entre l'élément de liaison (7) et l'étrier de fixation (6) se fait sur le côté du bouclier thermique (5) opposé à la source de chaleur.

2. Bouclier thermique selon la revendication 1, caractérisé en ce que la liaison entre le bouclier thermique (5) et l'étrier de fixation (6 ; 21) se fait à un endroit relativement froid de l'étrier de fixation (6 ; 21) et/ou du bouclier thermique (5).

3. Bouclier thermique selon la revendication 1 ou 2, caractérisé en ce que l'étrier de fixation (6) a à peu près la forme d'un U et est relié, avec les extrémités des branches du U, au bouclier thermique (5).

4. Bouclier thermique selon la revendication 1 ou 2, caractérisé en ce que l'étrier de fixation (21) a à peu près la forme d'un C.

5. Bouclier thermique selon l'une des revendications 1 à 4, caractérisé en ce que la liaison entre le bouclier thermique (5) et l'étrier de fixation (6) se fait par l'intermédiaire de rivets (15).

6. Bouclier thermique selon l'une des revendications 1 à 5, caractérisé en ce qu'il est constitué par une pièce en aluminium à une ou plusieurs couches.
